# EUROPEAN PATENT APPLICATION

(11) **EP 0 810 758 A1**
(43) Date of publication of application: **03.12.1997**
(21) Application number: 96935407.5
(22) Date of filing: 23.10.1996
(51) Int. Cl.: H04L 12/56

(54) **MOBILE ATM CELL TRANSMISSION COMMUNICATION SYSTEM, MOBILE COMMUNICATION TERMINAL, RADIO BASE STATION DEVICE, AND MOBILE ATM CELL TRANSMISSION COMMUNICATION METHOD**

(30) Priority: 23.10.1995 JP 274461/95
(71) Applicant: NTT MOBILE COMMUNICATIONS NETWORK INC., Minato-ku, Tokyo 105 (JP)
(72) Inventor: TSUBOYA, Hisakazu, Kawasaki-shi Kanagawa 215 (JP); MITA, Yasuhiro, Gunma 370-23 (JP); YABUSAKI, Masami, Chiba 277 (JP); UMEDA, Narumi, Yokohama-shi2Kanagawa 236 (JP)
(74) Representative: Beresford, Keith Denis Lewis
(86) International application number: JP9603075
(87) International publication number: WO9716006

(57) **Abstract**

A standard ATM cell is efficiently transmitted through a wireless section by connecting an ATM terminal to a mobile radio terminal. A routing bit (8-3) which is contained in the header section (8-1) of a standard ATM cell (8) and to which VPI/VCI1 is set is converted into codes (14-1 to 14-n) which are channel identifiers for transmission through a wireless section (6) and to which CODEs #1-#n are set by means of a channel information mutually converting section (11) of a mobile communication terminal (3). The terminal (3) divides the data composed of a payload section (8-2) and the header section (8-4) excluding the routing bit (8-3) of the cell (8) in accordance with the lengths of radio frames (9-1 to 9-n). Order-number identifiers (13-1 to 13-n) are added to divided data to form radio frames (9-1 to 9-n), which are then sent on the wireless section (6).

## Description

### TECHNICAL FIELD

The present invention relates to a mobile ATM cell transmission communication system and method for carrying out ATM (Asynchronous Transfer Mode) transmission.

### BACKGROUND ART

In a conventional mobile communication system adopting ATM transmission, it has been attempted to accommodate an ATM cell without change in a radio frame to be transmitted over a radio section.

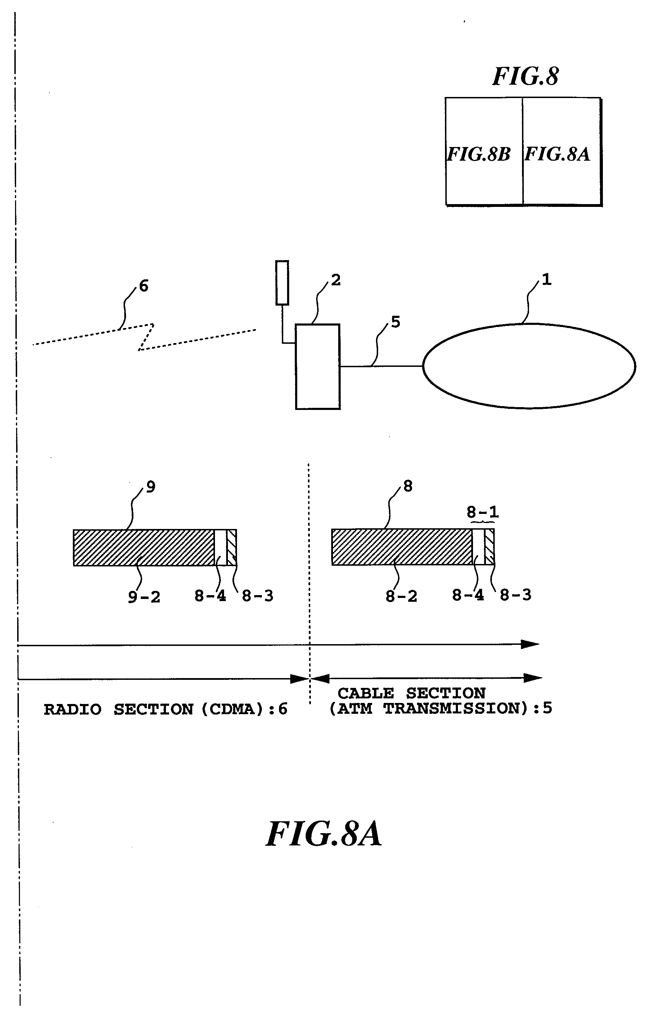

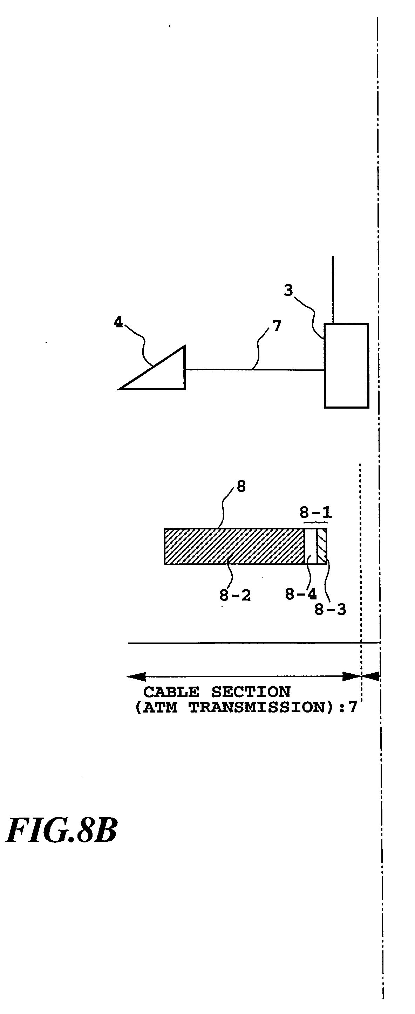

Such a system using CDMA (Code Division Multiple Access) transmission over the radio section will be described with reference to Figs. 8A and 8B.

In Figs. 8A and 8B, the reference numeral 1 designates a mobile communication network/public telecommunication network, that is, a mobile communication network and a public telecommunication network interconnected with the mobile communication network, 2 designates a base station, 3 designates a mobile station, and 4 designates an ATM terminal. The reference numerals 5 and 7 designate ATM cable sections for transmitting fixed length ATM cells, and 6 designates a radio section using the CDMA. A standard ATM cell 8 with a standard length of 53 bytes transmitted over the cable sections 5 and 7 consists of a header 8-1 and a payload section 8-2 including user information. The header 8-1 includes routing bits 8-3 (VPI/VCI: Virtual Path Indication/Virtual Channel Indication) serving as a channel identifier over the section, and another information section 8-4.

In the system as shown in Figs. 8A and 8B, the standard ATM cell 8 is sent from the ATM terminal 4 through the cable section 7 to the mobile station 3, in which it is mapped into the radio frame 9 together with the header 8-1 and payload section 8-2 constituting the standard ATM cell 8. The base station 2, receiving the radio frame 9 from the mobile station 3, extracts the standard ATM cell 8 from the radio frame 9, and transmits the standard ATM cell 8 to the mobile communication network/public telecommunication network 1 through the cable section 5. Thus, the standard ATM cell 8 is transmitted to the terminal point of the ATM section in the mobile communication network/public telecommunication network 1, with its values in the header 8-1 being varied.

The foregoing system has a problem in that the transmission efficiency of the radio section 6 is reduced owing to duplication of information because the routing bits 8-3 (VPI/VCI) included in the header 8-1 of the standard ATM cell 8 and the codes in the radio section 6 are both transmitted over the radio section 6, though they have one to one correspondence as a channel identifier.

### DISCLOSURE OF THE INVENTION

In such a configuration according to the conventional technique, the radio frame 9 in the radio section 6 is usually shorter than the standard ATM cell used in the ATM transmission. Accordingly, the standard ATM cell of the ATM transmission cannot be accommodated into a single radio frame, resulting in the delay of the data transmission.

In view of these problems, the object of the present invention is to provide a mobile ATM cell transmission communication system, a mobile station and a base station, and a mobile ATM cell transmission communication method, which can achieve transmission over the radio section 6 with a transmission efficiency higher and a transmission delay smaller than those of the conventional system when transmitting the standard ATM cell 8 through the mobile communication network/public telecommunication network 1.

According to a first aspect of the present invention, a mobile ATM cell transmission communication system is provided which includes:
a mobile station to which an ATM terminal is connected;
a base station for carrying out radio communications of data with the mobile station through at least one channel over a radio section between them; and
a network, to which the base station is connected, for transmitting data in a form of an ATM cell,
   the mobile ATM cell transmission communication system comprising:
   means provided in the mobile station for performing intertranslation between a channel identifier for one channel of the ATM terminal connected to the mobile station and at least one channel identifier for at least one channel over the radio section; and
   means provided in the base station for performing intertranslation between the at least one channel identifier for the radio section and a channel identifier for one channel in the network, to which the base station is connected,
   wherein the at least one channel identifier for the radio section is used as routing information for transmitting the ATM cell.

Here, in the mobile ATM cell transmission communication system,
a transmitting side including the mobile station may comprise
   means for adding dummy data to the ATM cell, and for equally dividing data in the ATM cell and the dummy data to assign the equally divided data to the at least one channel over the radio section such that the data assigned to respective channels have a predetermined radio frame length; and
   means for providing each the equally divided data with a sequence number identifier, and for carrying out radio transmission of the equally divided data with the sequence number identifier through at least one channel,
and a receiving side including the base station may comprise
   means for recovering the ATM cell by reassembling data in accordance with the sequence number identifiers.

In the mobile ATM cell transmission communication system,
a transmitting side including the mobile station may comprise, when adding dummy data to the ATM cell, and equally dividing data in the ATM cell and the dummy data to at least one channel over the radio section such that the data assigned to respective channels have a predetermined radio frame length,
   means for establishing correspondence in advance between a sequence of a plurality of the divided data and channel numbers of at least one channel for transmitting the divided data; and
   means for carrying out radio transmission of a plurality of the divided data through the channels of the channel numbers corresponding to the sequence of a plurality of the divided data,
and a receiving side may comprise
   means for recovering the ATM cell by reassembling data in accordance with the channel numbers.

In the mobile ATM cell transmission communication system, a method for accessing the radio section may be code division multiple access, and each of the channel identifiers may consist of a spreading code or a combination of a frequency and a spreading code.

In the mobile ATM cell transmission communication system, a method for accessing the radio section may be time division multiple access, and each of the channel identifiers may consist of a frequency code or a time slot number.

In the mobile ATM cell transmission communication system, a method for accessing the radio section may be frequency division multiple access, and each of the channel identifiers may consist of a frequency code.

In the mobile ATM cell transmission communication system, each of the channel identifiers for the radio section may consist of VPI.

According to a second aspect of the present invention, a mobile ATM cell transmission communication system is provided which includes:
a mobile station to which an ATM terminal is connected;
a base station for carrying out radio communications of data with the mobile station through at least one channel over a radio section between them; and
a network, to which the base station is connected, for transmitting data in a form of an ATM cell,
   the mobile station comprising:
   means provided in the mobile station for performing intertranslation between a channel identifier for one channel of the ATM terminal connected to the mobile station and at least one channel identifier for at least one channel over the radio section,
   wherein the at least one channel identifier for the radio section is used as routing information for transmitting the ATM cell.

Here, the mobile station may further comprise in a transmitting portion,
means for adding dummy data to the ATM cell, and for equally dividing data in the ATM cell and the dummy data to assign the equally divided data to the at least one channel over the radio section such that the data assigned to respective channels have a predetermined radio frame length; and
means for providing each the divided data with a sequence number identifier, and for carrying out radio transmission of the divided data with the sequence number identifier through at least one channel,
   and comprising in a receiving portion,
means for recovering the ATM cell by reassembling data in accordance with the sequence number identifiers.

In the mobile station, a transmitting side including the mobile station may comprise, when adding dummy data to the ATM cell, and equally dividing data in the ATM cell and the dummy data to at least one channel over the radio section such that the data assigned to respective channels have a predetermined radio frame length,
means for establishing correspondence in advance between a sequence of a plurality of divided data and channel numbers of at least one channel for transmitting the divided data; and
means for carrying out radio transmission of a plurality of the divided data through the channels of the channel numbers corresponding to the sequence of a plurality of the divided data,
   and may comprise at a receiving portion,
means for recovering the ATM cell by reassembling data in accordance with the channel numbers.

In the mobile station, an access method may be code division multiple access, and each of the channel identifiers may consist of a spreading code or a combination of a frequency and a spreading code.

In the mobile station, an access method may be time division multiple access, and each of the channel identifiers may consist of a frequency code or a time slot number.

In the mobile station, an access method may be frequency division multiple access, and each of the channel identifiers may consist of a frequency code.

In the mobile station, each of the channel identifiers for the radio section may consist of VPI.

According to a third aspect of the present invention, a mobile ATM cell transmission communication system is provided which includes:
a mobile station to which an ATM terminal is connected;
a base station for carrying out radio communications of data with the mobile station through at least one channel over a radio section between them; and
a network, to which the base station is connected, for transmitting data in a form of an ATM cell,
   the mobile base station comprising:
   means provided in the base station for performing intertranslation between at least one channel identifier for at least one channel over the radio section and a channel identifier for one channel in the network, to which the base station is connected,
   wherein the at least one channel identifier for the radio section is used as routing information for transmitting the ATM cell.

Here, the base station may further comprise in a transmitting portion,
means for adding dummy data to the ATM cell, and for equally dividing data in the ATM cell and the dummy data to assign the equally divided data to the at least one channel over the radio section such that the data assigned to respective channels have a predetermined radio frame length; and
means for providing each the divided data with a sequence number identifier, and for carrying out radio transmission of the divided data with the sequence number identifier through at least one channel,
   and may comprise in a receiving portion,
means for recovering the ATM cell by reassembling data in accordance with the sequence number identifiers.

In the base station, a transmitting side including the base station may comprise, when adding dummy data to the ATM cell, and equally dividing data in the ATM cell and the dummy data to at least one channel over the radio section such that the data assigned to respective channels have a predetermined radio frame length,
means for establishing correspondence in advance between a sequence of a plurality of the divided data and channel numbers of at least one channel for transmitting the divided data; and
means for carrying out radio transmission of a plurality of the divided data through the channels of the channel numbers corresponding to the sequence of a plurality of the divided data,
   and may comprise at a receiving portion,
means for recovering the ATM cell by reassembling data in accordance with the channel numbers.

In the base station, a method for accessing the radio section may be code division multiple access, and each of the channel identifiers may consist of a spreading code or a combination of a frequency and a spreading code.

In the base station, a method for accessing the radio section may be time division multiple access, and each of the channel identifiers may consist of a frequency code or a time slot number.

In the base station, a method for accessing the radio section may be frequency division multiple access, and each of the channel identifiers may consist of a frequency code.

In the base station, each of the channel identifiers for the radio section may consist of VPI.

According to a fourth aspect of the present invention, a mobile ATM cell transmission communication method is provided which includes the steps of:
connecting an ATM terminal to a mobile station;
carrying out radio communications of data through at least one channel over a radio section between the mobile station and a base station; and
carrying out transmission of data in a form of an ATM cell in a network, to which the base station is connected,
   the mobile ATM cell transmission communication method comprising:
   a step of performing, in the mobile station, intertranslation between a channel identifier for one channel of the ATM terminal connected to the mobile station and at least one channel identifier for at least one channel over the radio section; and
   a step of performing, in the base station, intertranslation between the at least one channel identifier for the radio section and a channel identifier for one channel in the network, to which the base station is connected,
   wherein the at least one channel identifier for the radio section is used as routing information for transmitting the ATM cell.

Here, in the mobile ATM cell transmission communication method,
a transmitting side including the mobile station may comprise:
   a step of adding dummy data to the ATM cell, and of equally dividing data in the ATM cell and the dummy data to at least one channel over the radio section such that the data assigned to respective channels have a predetermined radio frame length;
   a step of providing each the divided data with a sequence number identifier; and
   a step of carrying out radio transmission of the divided data with the sequence number identifier through at least one channel,
and a receiving side including the base station may comprise:
   a step of recovering the ATM cell by reassembling data in accordance with the sequence number identifiers.

In the mobile ATM cell transmission communication method,
a transmitting side including the mobile station may comprise,
   when adding dummy data to the ATM cell, and equally dividing data in the ATM cell and the dummy data to at least one channel over the radio section such that the data assigned to respective channels have a predetermined radio frame length, a step of establishing correspondence in advance between a sequence of a plurality of the divided data and channel numbers of at least one channel for transmitting the divided data; and
   a step of carrying out radio transmission of the divided data through the channels of the channel numbers corresponding to the sequence of a plurality of the divided data,
and a receiving side may comprise:
   a step of recovering the ATM cell by reassembling data in accordance with the channel numbers.

In the mobile ATM cell transmission communication method, a method for accessing the radio section may be code division multiple access, and each of the channel identifiers may consist of a spreading code or a combination of a frequency and a spreading code.

In the mobile ATM cell transmission communication method, a method for accessing the radio section may be time division multiple access, and each of the channel identifiers may consist of a frequency code or a time slot number.

In the mobile ATM cell transmission communication method, a method for accessing the radio section may be frequency division multiple access, and each of the channel identifiers may consist of a frequency code.

In the mobile ATM cell transmission communication method, wherein each of the channel identifiers for the radio section may consist of VPI.

According to a fifth aspect of the present invention, a mobile ATM cell transmission communication method is provided which includes the steps of:
connecting an ATM terminal to a mobile station;
carrying out radio communications of data through at least one channel over a radio section between the mobile station and a base station; and
transmitting data in a form of an ATM cell in a network, to which the base station is connected, the mobile ATM cell transmission communication method in the mobile station comprising:
a step of performing, in the mobile station, intertranslation between a channel identifier for one channel of the ATM terminal connected to the mobile station and at least one channel identifier for at least one channel over the radio section,
wherein the at least one channel identifier over the radio section is used as routing information for transmitting the ATM cell.

Here, the mobile ATM cell transmission communication method in the mobile station may further comprise when transmitting from the mobile station,
a step of adding dummy data to the ATM cell, and of equally dividing data in the ATM cell and the dummy data to assign the equally divided data to the at least one channel over the radio section such that the data assigned to respective channels have a predetermined radio frame length;
a step of providing each the divided data with a sequence number identifier; and
a step of carrying out radio transmission of the divided data with the sequence number identifier through at least one channel,
   and may comprise when receiving at the mobile station,
a step of recovering the ATM cell by reassembling data in accordance with the sequence number identifiers.

The mobile ATM cell transmission communication method in the mobile station may further comprise when transmitting from the mobile station,
when the mobile station adds dummy data to the ATM cell, and equally divides data in the ATM cell and the dummy data to at least one channel over the radio section such that the data assigned to respective channels have a predetermined radio frame length, a step of establishing correspondence in advance between a sequence of a plurality of the divided data and channel numbers of at least one channel for transmitting the divided data; and
   a step of carrying out radio transmission of the divided data through the channels of the channel numbers corresponding to the sequence of a plurality of the divided data,
and may comprise when receiving at the mobile station,
   a step of recovering the ATM cell by reassembling data in accordance with the channel numbers.

In the mobile ATM cell transmission communication method in the mobile station, a method for accessing the radio section may be code division multiple access, and each of the channel identifiers may consist of a spreading code or a combination of a frequency and a spreading code.

In the mobile ATM cell transmission communication method in the mobile station, a method for accessing the radio section may be time division multiple access, and each of the channel identifiers may consist of a frequency code or a time slot number.

In the mobile ATM cell transmission communication method in the mobile station, a method for accessing the radio section may be frequency division multiple access, and each of the channel identifiers may consist of a frequency code.

In the mobile ATM cell transmission communication method in the mobile station, each of the channel identifiers for the radio section may consist of VPI.

According to a sixth aspect of the present invention, a mobile ATM cell transmission communication method in a base station is provided which includes the steps of:
connecting an ATM terminal to a mobile station;
carrying out radio communications of data through at least one channel over a radio section between the mobile station and a base station; and
transmitting data in a form of an ATM cell in a network, to which the base station is connected, the mobile ATM cell transmission communication method in the base station comprising:
   a step of performing, in the base station, intertranslation between at least one channel identifier for the radio section and a channel identifier for one channel in the network, to which the base station is connected,
   wherein the at least one channel identifier over the radio section is used as routing information for transmitting the ATM cell.

Here, the mobile ATM cell transmission communication method in the base station may further comprise when transmitting from the base station,
a step of adding dummy data to the ATM cell, and of equally dividing data in the ATM cell and the dummy data to assign the equally divided data to the at least one channel over the radio section such that the data assigned to respective channels have a predetermined radio frame length;
a step of providing each the divided data with a sequence number identifier; and
a step of carrying out radio transmission of the divided data with the sequence number identifier through at least one channel,
   and may comprise when receiving at the base station,
a step of recovering the ATM cell by reassembling data in accordance with the sequence number identifiers.

The mobile ATM cell transmission communication method in the base station may further comprise when transmitting from the base station,
when the base station adds dummy data to the ATM cell, and equally divides data in the ATM cell and the dummy data to at least one channel over the radio section such that the data assigned to respective channels have a predetermined radio frame length, a step of establishing correspondence in advance between a sequence of a plurality of the divided data and channel numbers of at least one channel for transmitting the divided data; and
a step of carrying out radio transmission of the divided data through the channels of the channel numbers corresponding to the sequence of a plurality of the divided data,
   and may comprise when receiving at the base station,
a step of recovering the ATM cell by reassembling data in accordance with the channel numbers.

In the mobile ATM cell transmission communication method in the base station, a method for accessing the radio section may be code division multiple access, and each of the channel identifiers may consist of a spreading code or a combination of a frequency and a spreading code.

In the mobile ATM cell transmission communication method in the base station, a method for accessing the radio section may be time division multiple access, and each of the channel identifiers may consist of a frequency code or a time slot number.

In the mobile ATM cell transmission communication method in the base station, a method for accessing the radio section may be frequency division multiple access, and each of the channel identifiers may consist of a frequency code.

In the mobile ATM cell transmission communication method in the base station, each of the channel identifiers for the radio section may consist of VPI.

### BRIEF DESCRIPTION OF THE DRAWINGS

Fig. 1 illustrates the relationship between Figs. 1A and 1B;
Fig. 1A shows a cable section 5 and a radio section 6 in the system configuration of a radio section standard ATM cell transmission system of an embodiment 1;
Fig. 1B shows a cable section 7 in the system configuration of the radio section standard ATM cell transmission system of the embodiment 1;
Fig. 2 illustrates the relationship between Figs. 2A and 2B;
Fig. 2A shows the cable section 5 and the radio section 6 in the system configuration of a radio section standard ATM cell transmission system of an embodiment 2;
Fig. 2B shows a cable section 7 in the system configuration of the radio section standard ATM cell transmission system of the embodiment 2;
Fig. 3A shows a channel information intertranslation table 11-1 of the second embodiment;
Fig. 3B shows a channel information intertranslation table 12-1 of the second embodiment;
Fig. 4 illustrates the relationship between Figs. 4A and 4B;
Fig. 4A is a block diagram showing a base station 2 of the embodiment 2;
Fig. 4B is a block diagram showing a mobile station 3 of the embodiment 2;
Fig. 5 illustrates the relationship between Figs. 5A and 5B;
Fig. 5A shows the cable section 5 and the radio section 6 in the system configuration of a radio section standard ATM cell transmission system of an embodiment 3 employing CDMA as a method for accessing the radio section;
Fig. 5B shows a cable section 7 in the system configuration of the radio section standard ATM cell transmission system of the embodiment 3 employing CDMA as the method for accessing the radio section;
Fig. 6 illustrates the relationship between Figs. 6A and 6B;
Fig. 6A shows the cable section 5 and the radio section in the system configuration of a radio section standard ATM cell transmission system of an embodiment 4 employing TDMA as a method for accessing the radio section;
Fig. 6B shows the cable section 7 in the system configuration of the radio section standard ATM cell transmission system of the embodiment 4 employing the TDMA as a method for accessing the radio section;
Fig. 7 illustrates the relationship between Figs. 7A and 7B;
Fig. 7A shows the cable section 5 and the radio section 6 in the system configuration of a radio section standard ATM cell transmission system of an embodiment 5 employing FDMA as a method for accessing the radio section;
Fig. 7B shows the cable section 7 in the system configuration of the radio section standard ATM cell transmission system of the embodiment 5 employing the FDMA as a method for accessing the radio section;
Fig. 8 illustrates the relationship between Figs. 8A and 8B;
Fig. 8A shows the cable section 5 and the radio section 6 in a system configuration of a conventional radio section standard ATM cell transmission system; and
Fig. 8B shows the cable section 7 in the system configuration of the conventional radio section standard ATM cell transmission system.

### BEST MODE FOR CARRYING OUT THE INVENTION

The embodiments of the invention will now be described with reference to the accompanying drawings.

The embodiments of the present invention will be described taking an example applying the CDMA transmission method to the radio section 6.

### EMBODIMENT 1

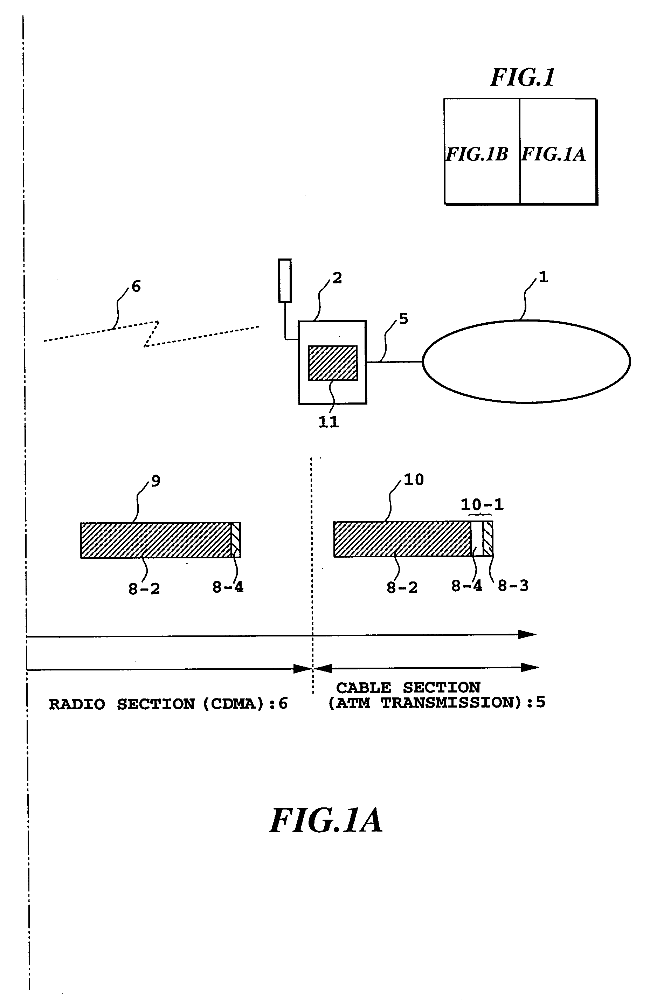

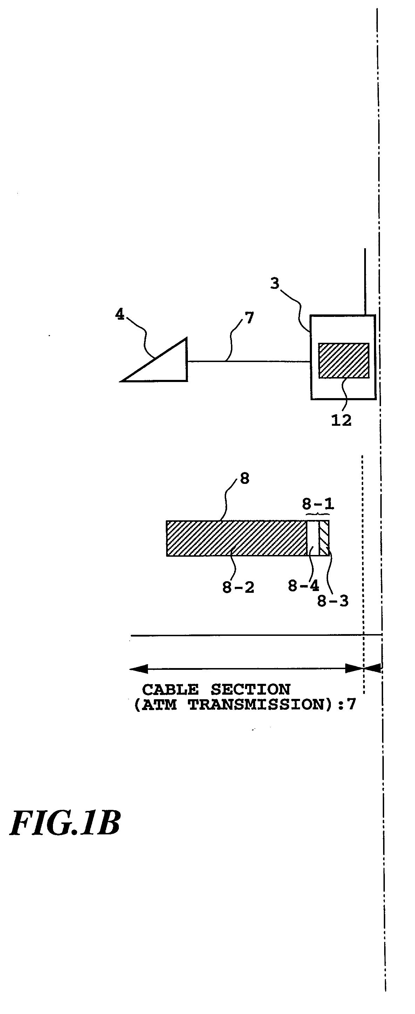

Figs. 1A and 1B are diagrams showing a system configuration of an embodiment 1 in accordance with the present invention, in which the like portions to those of the conventional system configuration shown in Figs. 8A and 8B are designated by the same reference numerals.

In Figs. 1A and 1B, channel information intertranslators 11 and 12 are provided in the base station 2 and the mobile station 3. Each of the channel information intertranslators 11 and 12 carries out, with a table, one to one translation between the header 8-1 of the standard ATM cell 8 used as the channel identifier and a code used for transmission over the radio section 6, so that each of the channel information intertranslations 11 and 12 establishes between the routing bits 8-3 of the standard ATM cell 8 and the code used for transmission over the radio section 6.

Figs. 1A and 1B show the reverse link transmission which transmits data from the ATM terminal 4.

In Figs. 1A and 1B, the standard ATM cell 8 is sent from the ATM terminal 4 to the cable section 7. The routing bits 8-3, in which the VPI/VCI1 in the header 8-1 of the standard ATM cell 8 are set, are translated by the channel information intertranslator 12 in the mobile station 3 into a code, in which CODE #1, the channel identifier used for the transmission over the radio section 6, is set. The code is stored in the memory of the mobile station 3 so that the correspondence is established between the code and the radio frame 9. The mobile station 3 assembles the radio frame 9 from the payload section 8-2 in the received standard ATM cell 8 and its header 8-4 excluding the routing bits 8-3, and transmits the radio frame 9 to the radio section 6.

The base station 2, having received the radio frame 9, translates the code, in which the CODE #1 is set, to the routing bits 8-3 in which the VPI/VCI2 of a header 10-1 are set, assembles a standard ATM cell 10 from the payload section 8-2, routing bits 8-3, and the header 8-4 excluding the routing bits 8-3, and transmits the standard ATM cell 10 to the mobile communication network/public telecommunication network 1 through the cable section 5.

### EMBODIMENT 2

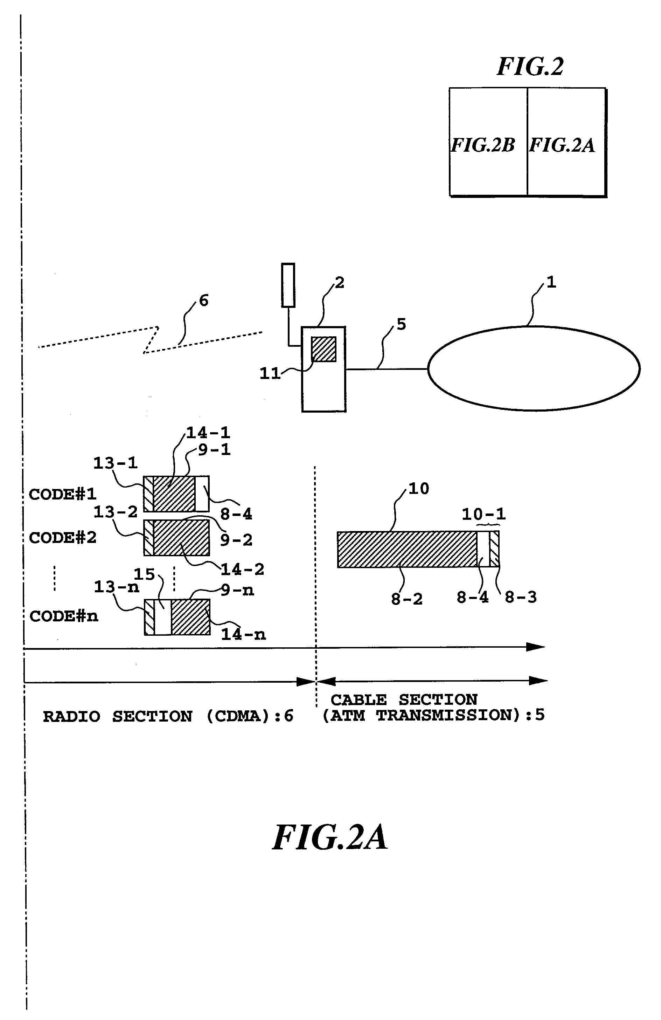

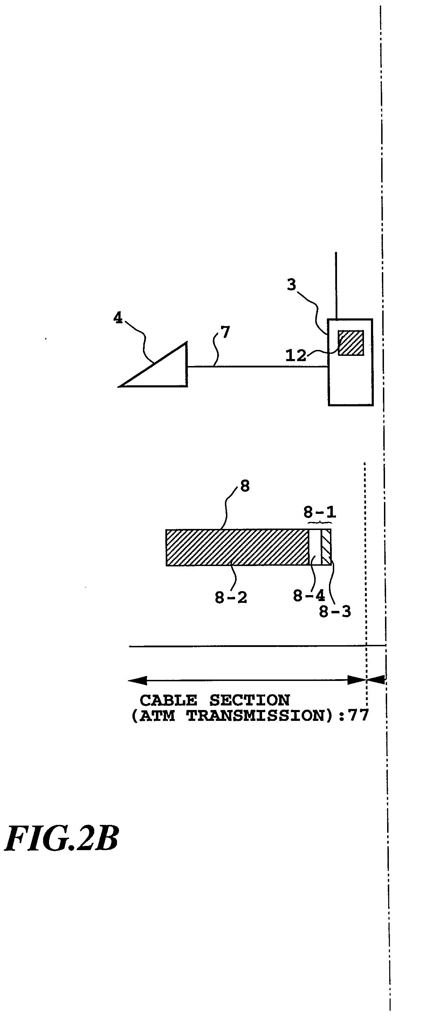

Figs. 2A and 2B are diagrams showing a system configuration of an embodiment 2 in accordance with the present invention, in which the like portions to those of the system configuration as shown in Figs. 8A and 8B used for explaining the conventional system are designated by the same reference numerals.

Figs. 2A and 2B show the reverse link transmission which transmits data from the ATM terminal 4.

The second embodiment as shown in Figs. 2A and 2B is an example, in which the standard ATM cell 8 sent from the ATM terminal 4 has the payload section 8-2 whose transmission information capacity is larger than that per radio frame on a single channel over the radio section 6.

In Figs. 2A and 2B, the standard ATM cell 8 is sent from the ATM terminal 4 to the cable section 7. The routing bits 8-3 in the header 8-1 of the standard ATM cell 8, in which the VPI/VCI1 is set, are translated by the channel information intertranslator 12 in the mobile station 3 into codes 14-1 - 14-n, in which CODEs #1-#n, channel identifiers used for the transmission over the radio section 6, are set. Each code is stored in the hardware of the mobile station 3 such that it corresponds to each one of the radio frames. The mobile station 3 divides the data consisting of the payload section 8-2 in the standard ATM cell 8 and its header 8-4 excluding the routing bits 8-3, thereby matching the length of the divided data to that of the radio frame. In this division, dummy data 15 is added to the standard ATM cell 8 so that the data in the standard ATM cell 8 and the dummy data 15 are equally divided to be assigned to one or more channels of the radio section 6 in such a manner that the data assigned to respective channels have a predetermined radio frame length. The divided data are provided with sequence number identifiers 13-1 - 13-n to form radio frames 9-1 - 9-n. Thus, the radio frames are transmitted to the radio section 6.

The base station 2, having received the radio frames 9-1 - 9-n, translates, by the channel information intertranslator 11, the codes 14-1 - 14-n, in which the CODEs #1-#n are set, to the routing bits 8-3, in which the VPI/VCI2 in the header 10-1 are set. Subsequently, it assembles the standard ATM cell 10 from the payload section 8-2 which is reassembled in accordance with the sequence number identifiers 13-1 - 13-n, and from the routing bits 8-3 and the header 8-4 excluding the routing bits 8-3, and transmits the standard ATM cell 10 to the mobile communication network/public telecommunication network 1 through the cable section 5.

The reverse link transmission is thus carried out from the mobile station to the network. The forward link transmission, on the other hand, is carried out in the inverse order.

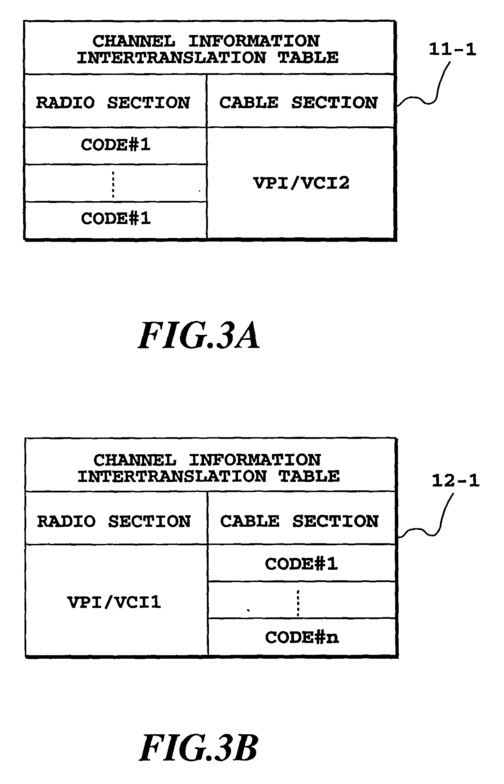

Figs. 3A and 3B show translation tables used in the channel information intertranslators 11 and 12 in the embodiment 2. Fig. 3A illustrates a channel information intertranslator 11-1, and Fig. 3B illustrates a channel information intertranslator 12-1. When setting a call, the channel information intertranslator 11-1 establishes correspondence between the connection VPI/VCI2 over the cable section 5 and the CODEs #1-#n over the radio section 6, and the channel information intertranslator 12-1 establishes correspondence between the CODEs #1-#n over the radio section 6 and the connection VPI/VCI1 over the cable section 7, thereby registering the correspondence in the tables 11-1 and 12-1. The tables 11-1 and 12-1 are used for transferring user information during communications so that the transmission as shown in Figs. 2A and 2B is carried out.

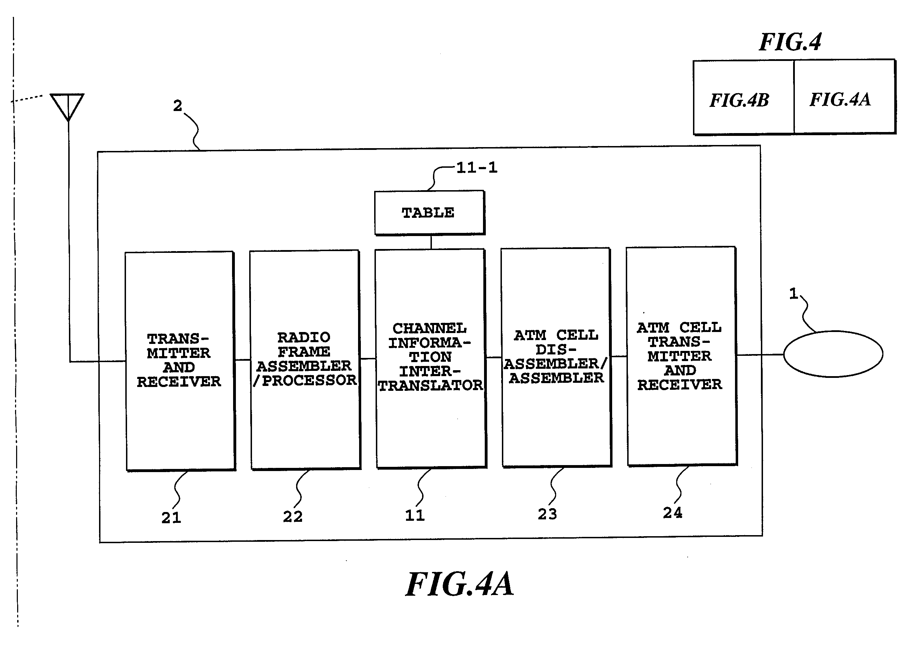

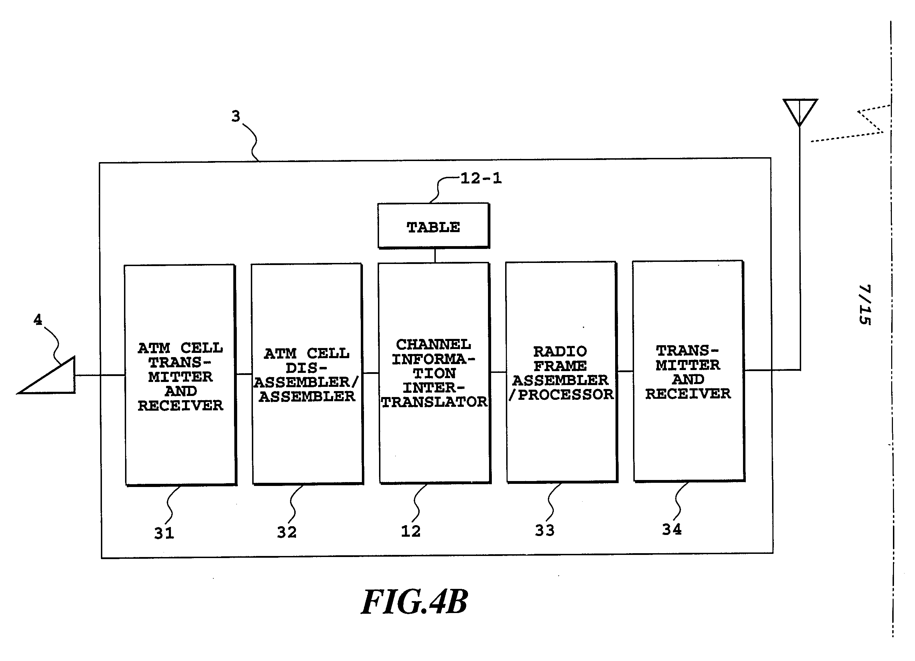

Figs. 4A and 4B show the base station 2 and mobile station 3 used in the embodiment 2.

In Fig. 4B, the mobile station 3 comprises a standard ATM cell transmitter/receiver 31, a standard ATM cell disassembler/assembler 32, the channel information intertranslator 12, a radio frame assembler/processor 33 and a transmitter/receiver 34. In Fig. 4A, the base station 2 comprises a transmitter/receiver 21, a radio frame assembler/processor 22, the channel information intertranslator 11, a standard ATM cell disassembler/assembler 23, and a standard ATM cell transmitter/receiver 24.

The standard ATM cell 8 sent from the ATM terminal 4 is received by the standard ATM cell transmitter/receiver 31, and is disassembled by the standard ATM cell disassembler/assembler 32 into pieces with a length of the radio frame, to which the sequence number identifiers are assigned. Subsequently, the channel information intertranslator 12 carries out, for individual radio frames, translation of the routing bits 8-3 of the standard ATM cell 8 into the codes over the radio section 6. Finally, the radio frame assembler/processor 33 assembles the radio frames, and transmits them to the radio section 6 through the transmitter/receiver 34.

In the base station 2, the radio frames received by the transmitter/receiver 21 are recognized by the radio frame assembler/processor 22, and are transferred to the channel information intertranslator 11. The channel information intertranslator 11 translates the codes over the radio channels into the routing bits 8-3 in the standard ATM cell. The standard ATM cell disassembler/assembler 23 assembles the one or more radio frames in accordance with the sequence number identifiers to form a single standard ATM cell 8 from one or more radio frames, and outputs it to the mobile communication network/public telecommunication network 1.

The reverse link transmission is thus carried out. On the other hand, the forward link transmission is carried out in the reverse order.

According to the embodiment 2, an improvement in the transmission efficiency by 4.9% (2.625 bytes/53 bytes) can be achieved including a three-byte reduction of the routing bits 8-3, when the sequence number identifier consisting of three bits is used.

Furthermore, the transmission rate is increased because dividing the standard ATM cell 8 enables one or more radio frames to be transmitted in parallel through at least one channel.

### EMBODIMENT 3

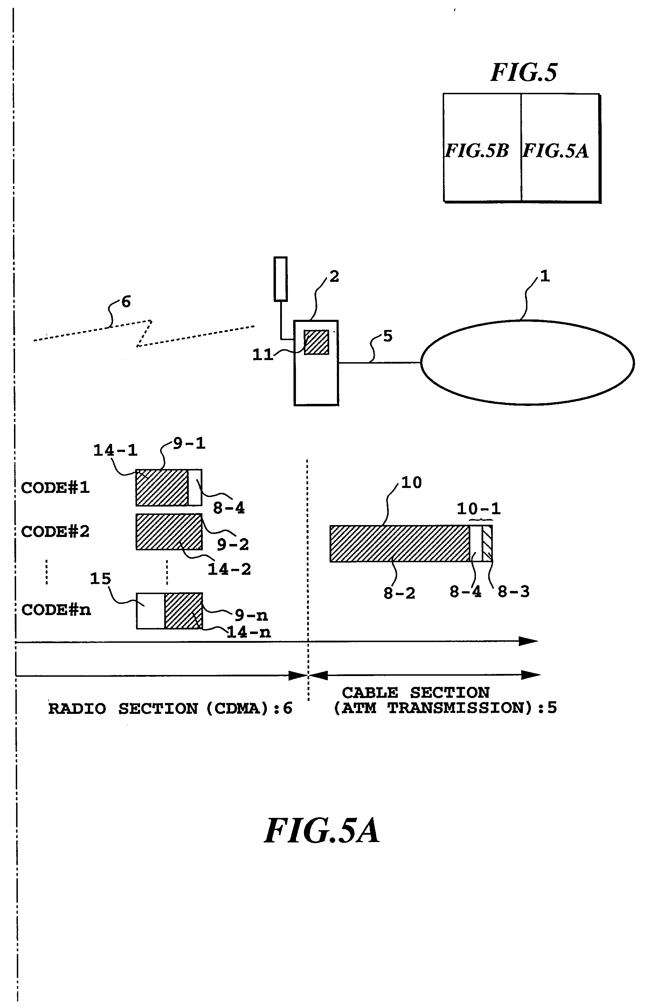

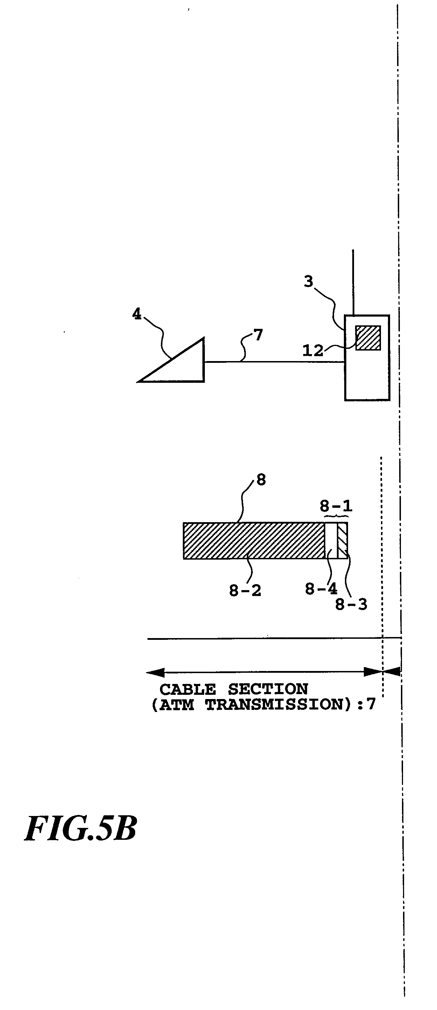

Figs. 5A and 5B show a system configuration of an embodiment 3, in which like portions to those in the system configurations as shown in Figs. 2A and 2B, and Figs. 4A and 4B are designated by the same reference numerals.

In the embodiment 3 as shown in Figs. 5A and 5B, the standard ATM cell 8 sent from the ATM terminal 4 has a payload section whose transmission information capacity is greater than that per radio frame on a single channel over the radio section 6, as in the embodiment 2.

In Figs. 5A and 5B, the standard ATM cell 8 is sent from the ATM terminal 4 to the cable section 7. In the mobile station 3, the channel information intertranslator 12 translates the routing bits 8-3, in which the VPI/VCI1 in the header 8-1 of the standard ATM cell 8 is set, into the codes 14-1 - 14-n, in which the CODEs #1 - #n are set which are used as the transmission channel identifiers in the radio section 6. Each code is stored in the memory of the mobile station 3 so that the correspondence is established between the code and each one of the radio frames. In the mobile station 3, the data consisting of the payload section 8-2 and the header 8-4 excluding the routing bits 8-3 in the received standard ATM cell 8 is divided to match the radio frame length. In the course of the division, the dummy data 15 is added to the standard ATM cell 8, and the data in the standard ATM cell 8 and the dummy data 15 are equally divided and assigned to one or more channels over the radio section 6, so that the data assigned to respective channels have the predetermined radio frame length. In this division, since the sequence number identifiers generated during the division have fixed correspondence with code numbers in advance, the sequence number identifiers are not assigned to the respective divided data. The cell divided into pieces which form the radio frames 9-1 - 9-n is sent to the radio section 6.

In the base station 2, after receiving the radio frames 9-1 - 9-n, the channel information intertranslator 11 translates the codes 14-1 - 14-n, in which the CODEs #1-#n are set, into the routing bits 8-3 in which the VPI/VCI2 is set. In addition, the standard ATM cell 10 is assembled from the payload section 8-2 reassembled in accordance with the code numbers, and from the routing bits 8-3 and the header 8-4 excluding the routing bits 8-3, so that the standard ATM cell 10 is transmitted to the mobile communication network/public telecommunication network 1 through the cable section 5.

The reverse link transmission is thus carried out from the mobile station to the network. On the other hand, the forward link transmission is performed in the reverse order.

The channel information intertranslation tables used in the channel information intertranslators 11 and 12 are tables having the same format as the translation tables 11-1 and 12-1 employed in the embodiment 2 as shown in Figs. 3A and 3B. Although the format is the same, it is necessary to fixedly determine the order of correspondence to the channels, because the order of correspondence of the divided data has fixed correspondence with the code numbers (channels).

According to the foregoing processing of the embodiment 3, the transmission efficiency is improved by 5.6% (three bytes/53 bytes) because it becomes unnecessary to transmit the routing bits of three bytes. Comparing this with the embodiment 2, a higher transmission efficiency can be achieved because the setting of the sequence number identifier is obviated.

Moreover, the transmission rate increases because the division of the ATM standard cell enables the one or more radio frames to be transmitted through at least one channel in parallel.

When the standard ATM cell 8 is divided in the configuration as shown in Figs. 4A and 4B of the present embodiment 3, it must be divided into pieces longer than those in the embodiment 2 because it is unnecessary to assign the sequence number identifiers in this embodiment. Furthermore, the standard ATM cell 8 must be reassembled by identifying the order by code numbers (channels).

Although the embodiments 2 and 3 are described taking examples in which the CDMA is used as the method for accessing the radio section, and codes are used as the channel identifiers, similar operation and performance can be achieved even if a frequency or a spreading code is used as the channel identifier.

### EMBODIMENT 4

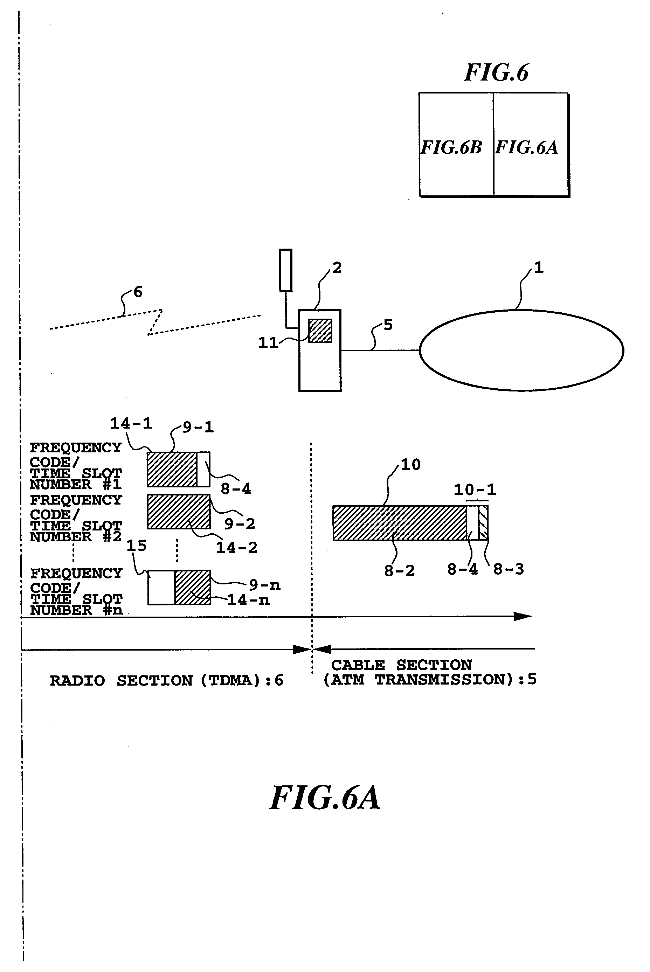

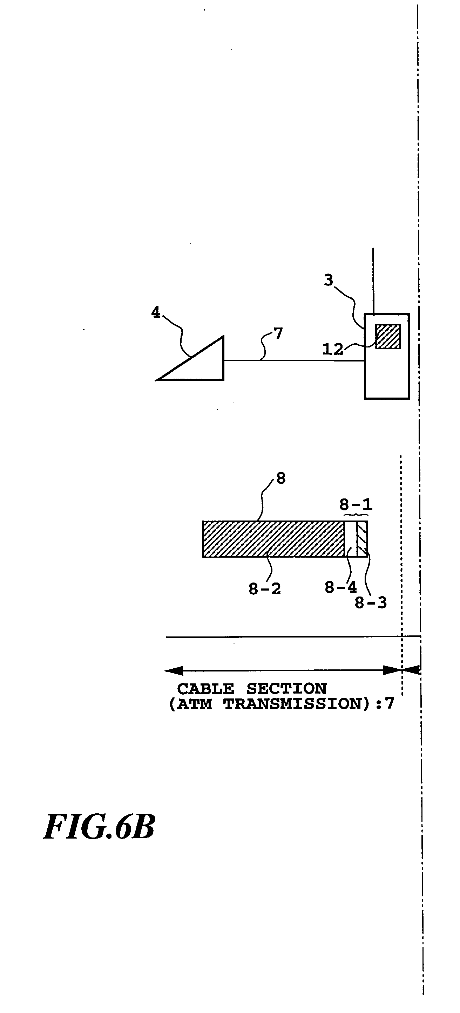

Figs. 6A and 6B are diagrams showing a configuration of a system of an embodiment 4, in which like portions to those in Figs. 2A and 2B, and Figs. 4A and 4B are designated by the same reference numerals.

This embodiment differs from the embodiment 3 in that it employs time division multiple access (TDMA) for accessing the radio section 6. This also makes it possible to achieve similar operation and performance by using frequency codes or time slot numbers as the channel identifiers. Furthermore, it becomes unnecessary to use the sequence number identifiers for the radio section 6 as in the embodiment 2 by establishing correspondence between the VP/VC and the channel numbers designated by the frequency codes or time slot numbers.

### EMBODIMENT 5

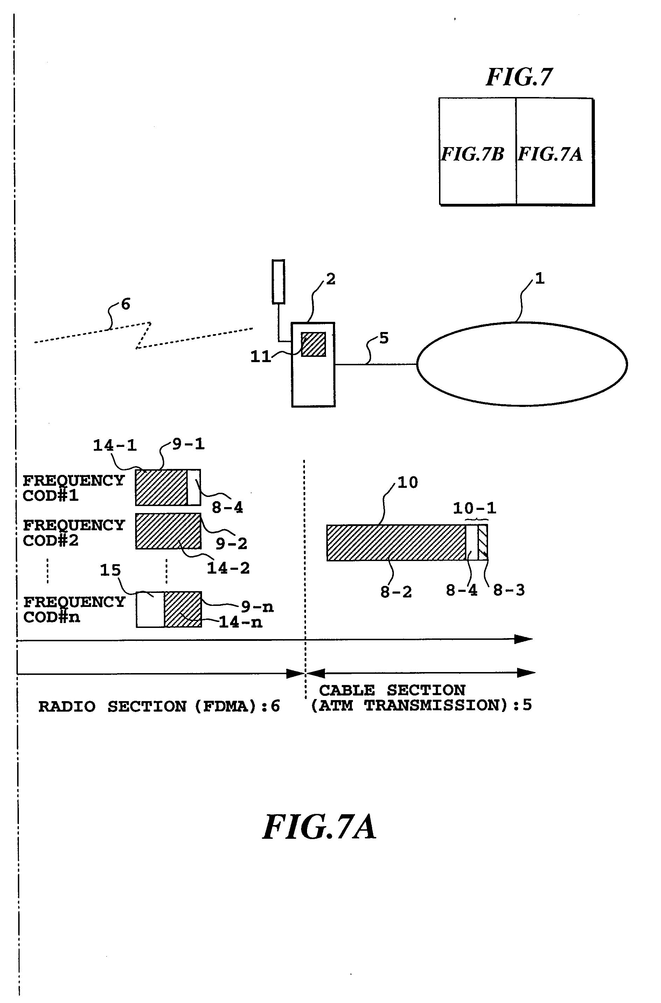

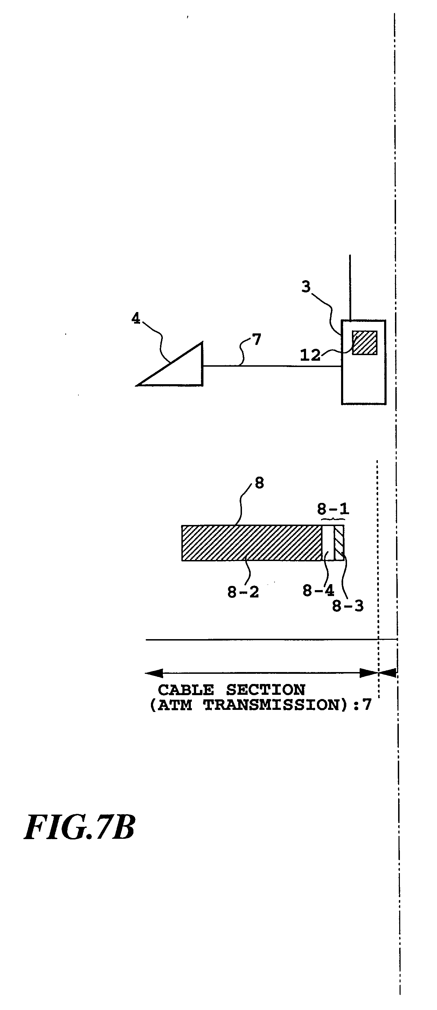

Figs. 7A and 7B are diagrams showing a configuration of a system of an embodiment 5, in which like portions to those in Figs. 2A and 2B, and Figs. 4A and 4B are designated by the same reference numerals.

This embodiment differs from the embodiment 3 in that it employs frequency division multiple access (FDMA) for accessing the radio section 6. This also makes it possible to achieve similar operation and performance by using frequency codes as the channel identifiers. Furthermore, it becomes unnecessary to use the sequence number identifiers for the radio section 6 as in the embodiment 2 by establishing correspondence between the VP/VC and the channel numbers designated by the frequency codes.

The foregoing embodiments of the present invention can be implemented using only hardware, or a combination of a computer and software.

Although the foregoing embodiments of the present invention employ VPI/VCI as the channel identifiers on the radio sections, only VPI can be used. In this case, it is possible to transmit the VCI field as it is attached to the payload section.

According to the present invention, it is unnecessary to transmit the channel identifier corresponding to the routing bits 8-3 over the radio section 6. In addition, because the present invention transmits in parallel one or more radio frames through at least one channel, the radio section standard ATM cell transmission can be achieved over the radio section 6 with high efficiency and small delay.

## Claims

1. A mobile ATM cell transmission communication system including:
a mobile station to which an ATM terminal is connected;
a base station for carrying out radio communications of data with said mobile station through at least one channel over a radio section between them; and
a network, to which said base station is connected, for transmitting data in a form of an ATM cell,
said mobile ATM cell transmission communication system characterized by comprising:
means provided in said mobile station for performing intertranslation between a channel identifier for one channel of said ATM terminal connected to said mobile station and at least one channel identifier for at least one channel over said radio section; and
means provided in said base station for performing intertranslation between said at least one channel identifier for said radio section and a channel identifier for one channel in said network, to which said base station is connected,
wherein said at least one channel identifier for said radio section is used as routing information for transmitting said ATM cell.

2. The mobile ATM cell transmission communication system as claimed in claim 1,
characterized in that a transmitting side including said mobile station comprises:
means for adding dummy data to said ATM cell, and for equally dividing data in said ATM cell and said dummy data to assign said equally divided data to said at least one channel over said radio section such that said data assigned to respective channels have a predetermined radio frame length; and
means for providing each said equally divided data with a sequence number identifier, and for carrying out radio transmission of said equally divided data with the sequence number identifier through at least one channel,
and characterized in that a receiving side including said base station comprises:
means for recovering said ATM cell by reassembling data in accordance with said sequence number identifiers.

3. The mobile ATM cell transmission communication system as claimed in claim 1,
characterized in that a transmitting side including said mobile station comprises, when adding dummy data to said ATM cell, and equally dividing data in said ATM cell and said dummy data to at least one channel over said radio section such that said data assigned to respective channels have a predetermined radio frame length,
means for establishing correspondence in advance between a sequence of a plurality of said divided data and channel numbers of at least one channel for transmitting said divided data; and
means for carrying out radio transmission of a plurality of said divided data through said channels of said channel numbers corresponding to the sequence of a plurality of said divided data,
and characterized in that a receiving side comprises:
means for recovering said ATM cell by reassembling data in accordance with said channel numbers.

4. The mobile ATM cell transmission communication system as claimed in any one of claims 1-3, characterized in that a method for accessing said radio section is code division multiple access, and each of said channel identifiers consists of a spreading code or a combination of a frequency and a spreading code.

5. The mobile ATM cell transmission communication system as claimed in any one of claims 1-3, characterized in that a method for accessing said radio section is time division multiple access, and each of said channel identifiers consists of a frequency code or a time slot number.

6. The mobile ATM cell transmission communication system as claimed in any one of claims 1-3, characterized in that a method for accessing said radio section is frequency division multiple access, and each of said channel identifiers consists of a frequency code.

7. The mobile ATM cell transmission communication system as claimed in any one of claims 1-3, characterized in that each of said channel identifiers for the radio section consists of VPI.

8. A mobile ATM cell transmission communication system including:
a mobile station to which an ATM terminal is connected;
a base station for carrying out radio communications of data with said mobile station through at least one channel over a radio section between them; and
a network, to which said base station is connected, for transmitting data in a form of an ATM cell,
said mobile station characterized by comprising:
means provided in said mobile station for performing intertranslation between a channel identifier for one channel of said ATM terminal connected to said mobile station and at least one channel identifier for at least one channel over said radio section,
wherein said at least one channel identifier for said radio section is used as routing information for transmitting said ATM cell.

9. The mobile station as claimed in claim 8, further characterized by comprising in a transmitting portion,
means for adding dummy data to said ATM cell, and for equally dividing data in said ATM cell and said dummy data to assign said equally divided data to said at least one channel over said radio section such that said data assigned to respective channels have a predetermined radio frame length; and
means for providing each said divided data with a sequence number identifier, and for carrying out radio transmission of said divided data with the sequence number identifier through at least one channel,
and characterized by comprising in a receiving portion,
means for recovering said ATM cell by reassembling data in accordance with said sequence number identifiers.

10. The mobile station as claimed in claim 8,
characterized in that a transmitting side including said mobile station comprises, when adding dummy data to said ATM cell, and equally dividing data in said ATM cell and said dummy data to at least one channel over said radio section such that said data assigned to respective channels have a predetermined radio frame length,
means for establishing correspondence in advance between a sequence of a plurality of said divided data and channel numbers of at least one channel for transmitting said divided data; and
means for carrying out radio transmission of a plurality of said divided data through said channels of said channel numbers corresponding to the sequence of a plurality of said divided data,
and characterized by comprising at a receiving portion,
means for recovering said ATM cell by reassembling data in accordance with said channel numbers.

11. The mobile station as claimed in any one of claims 8-10, characterized in that an access method is code division multiple access, and each of said channel identifiers consists of a spreading code or a combination of a frequency and a spreading code.

12. The mobile station as claimed in any one of claims 8-10, characterized in that an access method is time division multiple access, and each of said channel identifiers consists of a frequency code or a time slot number.

13. The mobile station as claimed in any one of claims 8-10, characterized in that an access method is frequency division multiple access, and each of said channel identifiers consists of a frequency code.

14. The mobile station as claimed in any one of claims 8-10, characterized in that each of said channel identifiers for the radio section consists of VPI.

15. A mobile ATM cell transmission communication system including:
a mobile station to which an ATM terminal is connected;
a base station for carrying out radio communications of data with said mobile station through at least one channel over a radio section between them; and
a network, to which said base station is connected, for transmitting data in a form of an ATM cell,
said mobile base station characterized by comprising:
means provided in said base station for performing intertranslation between at least one channel identifier for at least one channel over said radio section and a channel identifier for one channel in said network, to which said base station is connected,
wherein said at least one channel identifier for said radio section is used as routing information for transmitting said ATM cell.

16. The base station as claimed in claim 15, further characterized by comprising in a transmitting portion,
means for adding dummy data to said ATM cell, and for equally dividing data in said ATM cell and said dummy data to assign said equally divided data to said at least one channel over said radio section such that said data assigned to respective channels have a predetermined radio frame length; and
means for providing each said divided data with a sequence number identifier, and for carrying out radio transmission of said divided data with the sequence number identifier through at least one channel,
and characterized by comprising in a receiving portion,
means for recovering said ATM cell by reassembling data in accordance with said sequence number identifiers.

17. The base station as claimed in claim 15, further
characterized in that a transmitting side including said base station comprises, when adding dummy data to said ATM cell, and equally dividing data in said ATM cell and said dummy data to at least one channel over said radio section such that said data assigned to respective channels have a predetermined radio frame length,
means for establishing correspondence in advance between a sequence of a plurality of said divided data and channel numbers of at least one channel for transmitting said divided data; and
means for carrying out radio transmission of a plurality of said divided data through said channels of said channel numbers corresponding to the sequence of a plurality of said divided data,
and characterized by comprising at a receiving portion,
means for recovering said ATM cell by reassembling data in accordance with said channel numbers.

18. The base station as claimed in any one of claims 15-17, characterized in that a method for accessing said radio section is code division multiple access, and each of said channel identifiers consists of a spreading code or a combination of a frequency and a spreading code.

19. The base station as claimed in any one of claims 15-17, characterized in that a method for accessing said radio section is time division multiple access, and each of said channel identifiers consists of a frequency code or a time slot number.

20. The base station as claimed in any one of claims 15-17, characterized in that a method for accessing said radio section is frequency division multiple access, and each of said channel identifiers consists of a frequency code.

21. The base station as claimed in any one of claims 15-17, characterized in that each of said channel identifiers for said radio section consists of VPI.

22. A mobile ATM cell transmission communication method,
connecting an ATM terminal to a mobile station;
carrying out radio communications of data through at least one channel over a radio section between said mobile station and a base station; and
carrying out transmission of data in a form of an ATM cell in a network, to which said base station is connected,
said mobile ATM cell transmission communication method characterized by comprising:
a step of performing, in said mobile station, intertranslation between a channel identifier for one channel of said ATM terminal connected to said mobile station and at least one channel identifier for at least one channel over said radio section; and
a step of performing, in said base station, intertranslation between said at least one channel identifier for said radio section and a channel identifier for one channel in said network, to which said base station is connected,
wherein said at least one channel identifier for said radio section is used as routing information for transmitting said ATM cell.

23. The mobile ATM cell transmission communication method as claimed in claim 22,
characterized in that a transmitting side including said mobile station comprises:
a step of adding dummy data to said ATM cell, and of equally dividing data in said ATM cell and said dummy data to at least one channel over said radio section such that said data assigned to respective channels have a predetermined radio frame length;
a step of providing each said divided data with a sequence number identifier; and
a step of carrying out radio transmission of said divided data with the sequence number identifier through at least one channel,
and characterized in that a receiving side including said base station comprises:
a step of recovering said ATM cell by reassembling data in accordance with said sequence number identifiers.

24. The mobile ATM cell transmission communication method as claimed in claim 22,
characterized in that a transmitting side including said mobile station comprises,
when adding dummy data to said ATM cell, and equally dividing data in said ATM cell and said dummy data to at least one channel over said radio section such that said data assigned to respective channels have a predetermined radio frame length, a step of establishing correspondence in advance between a sequence of a plurality of said divided data and channel numbers of at least one channel for transmitting said divided data; and
a step of carrying out radio transmission of said divided data through said channels of said channel numbers corresponding to the sequence of a plurality of said divided data,
and characterized in that a receiving side comprises:
a step of recovering said ATM cell by reassembling data in accordance with said channel numbers.

25. The mobile ATM cell transmission communication method as claimed in any one of claims 22-24, characterized in that a method for accessing said radio section is code division multiple access, and each of said channel identifiers consists of a spreading code or a combination of a frequency and a spreading code.

26. The mobile ATM cell transmission communication method as claimed in any one of claims 22-24, characterized in that a method for accessing said radio section is time division multiple access, and each of said channel identifiers consists of a frequency code or a time slot number.

27. The mobile ATM cell transmission communication method as claimed in any one of claims 22-24, characterized in that a method for accessing said radio section is frequency division multiple access, and each of said channel identifiers consists of a frequency code.

28. The mobile ATM cell transmission communication method as claimed in any one of claims 22-24, characterized in that each of said channel identifiers for the radio section consists of VPI.

29. A mobile ATM cell transmission communication method,
connecting an ATM terminal to a mobile station;
carrying out radio communications of data through at least one channel over a radio section between said mobile station and a base station; and
transmitting data in a form of an ATM cell in a network, to which said base station is connected, said mobile ATM cell transmission communication method in said mobile station characterized by comprising:
a step of performing, in said mobile station, intertranslation between a channel identifier for one channel of said ATM terminal connected to said mobile station and at least one channel identifier for at least one channel over said radio section,
wherein said at least one channel identifier over said radio section is used as routing information for transmitting said ATM cell.

30. The mobile ATM cell transmission communication method in said mobile station as claimed in claim 29, further characterized by comprising when transmitting from said mobile station,
a step of adding dummy data to said ATM cell, and of equally dividing data in said ATM cell and said dummy data to assign said equally divided data to said at least one channel over said radio section such that said data assigned to respective channels have a predetermined radio frame length;
a step of providing each said divided data with a sequence number identifier; and
a step of carrying out radio transmission of said divided data with the sequence number identifier through at least one channel,
and characterized by comprising when receiving at said mobile station,
a step of recovering said ATM cell by reassembling data in accordance with said sequence number identifiers.

31. The mobile ATM cell transmission communication method in said mobile station as claimed in claim 29, further characterized by comprising when transmitting from said mobile station,
when said mobile station adds dummy data to said ATM cell, and equally divides data in said ATM cell and said dummy data to at least one channel over said radio section such that said data assigned to respective channels have a predetermined radio frame length, a step of establishing correspondence in advance between a sequence of a plurality of said divided data and channel numbers of at least one channel for transmitting said divided data; and
a step of carrying out radio transmission of said divided data through said channels of said channel numbers corresponding to the sequence of a plurality of said divided data,
and characterized by comprising when receiving at said mobile station,
a step of recovering said ATM cell by reassembling data in accordance with said channel numbers.

32. The mobile ATM cell transmission communication method in said mobile station as claimed in any one of claims 29-31, characterized in that a method for accessing said radio section is code division multiple access, and each of said channel identifiers consists of a spreading code or a combination of a frequency and a spreading code.

33. The mobile ATM cell transmission communication method in said mobile station as claimed in any one of claims 29-31, characterized in that a method for accessing said radio section is time division multiple access, and each of said channel identifiers consists of a frequency code or a time slot number.

34. The mobile ATM cell transmission communication method in said mobile station as claimed in any one of claims 29-31, characterized in that a method for accessing said radio section is frequency division multiple access, and each of said channel identifiers consists of a frequency code.

35. The mobile ATM cell transmission communication method in said mobile station as claimed in any one of claims 29-31, characterized in that each of said channel identifiers for the radio section consists of VPI.

36. A mobile ATM cell transmission communication method in a base station, said method
connecting an ATM terminal to a mobile station;
carrying out radio communications of data through at least one channel over a radio section between said mobile station and a base station; and
transmitting data in a form of an ATM cell in a network, to which said base station is connected, said mobile ATM cell transmission communication method in said base station characterized by comprising:
a step of performing, in said base station, intertranslation between at least one channel identifier for said radio section and a channel identifier for one channel in said network, to which said base station is connected,
wherein said at least one channel identifier over said radio section is used as routing information for transmitting said ATM cell.

37. The mobile ATM cell transmission communication method in the base station as claimed in claim 36, further characterized by comprising when transmitting from said base station,
a step of adding dummy data to said ATM cell, and of equally dividing data in said ATM cell and said dummy data to assign said equally divided data to said at least one channel over said radio section such that said data assigned to respective channels have a predetermined radio frame length;
a step of providing each said divided data with a sequence number identifier; and
a step of carrying out radio transmission of said divided data with the sequence number identifier through at least one channel,
and characterized by comprising when receiving at said base station,
a step of recovering said ATM cell by reassembling data in accordance with said sequence number identifiers.

38. The mobile ATM cell transmission communication method in said base station as claimed in claim 36, further characterized by comprising when transmitting from said base station,
when said base station adds dummy data to said ATM cell, and equally divides data in said ATM cell and said dummy data to at least one channel over said radio section such that said data assigned to respective channels have a predetermined radio frame length, a step of establishing correspondence in advance between a sequence of a plurality of said divided data and channel numbers of at least one channel for transmitting said divided data; and
a step of carrying out radio transmission of said divided data through said channels of said channel numbers corresponding to the sequence of a plurality of said divided data,
and characterized by comprising when receiving at said base station,
a step of recovering said ATM cell by reassembling data in accordance with said channel numbers.

39. The mobile ATM cell transmission communication method in said base station as claimed in any one of claims 36-38, characterized in that a method for accessing said radio section is code division multiple access, and each of said channel identifiers consists of a spreading code or a combination of a frequency and a spreading code.

40. The mobile ATM cell transmission communication method in said base station as claimed in any one of claims 36-38, characterized in that a method for accessing said radio section is time division multiple access, and each of said channel identifiers consists of a frequency code or a time slot number.

41. The mobile ATM cell transmission communication method in said base station as claimed in any one of claims 36-38, characterized in that a method for accessing said radio section is frequency division multiple access, and each of said channel identifiers consists of a frequency code.

42. The mobile ATM cell transmission communication method in said base station as claimed in any one of claims 36-38, characterized in that each of said channel identifiers for the radio section consists of VPI.
